Europäisches Patentamt

European Patent Office

Office européen des brevets

(19)

(11) EP 0 784 119 A1

(12) EUROPEAN PATENT APPLICATION

(43) Date of publication:
16.07.1997 Bulletin 1997/29

(51) Int Cl.⁶: **D21H 19/42**

(21) Application number: 97660001.5

(22) Date of filing: 03.01.1997

(84) Designated Contracting States:
AT BE DE FR GB IT NL SE

(30) Priority: 10.01.1996 FI 960125

(71) Applicant: RAISIO CHEMICALS OY
21200 Raisio (FI)

(72) Inventors:
• Hamunen, Antti
21200 Raisio (FI)

• Teirfolk, Jan-Erik
20320 Turku (FI)
• Lindholm, Jörgen
20460 Turku (FI)
• Paavola, Virpi
21200 Raisio (FI)

(74) Representative: Haimelin, Jukka Ilmari et al
Oy Jalo Ant-Wuorinen Ab
Iso Roobertinkatu 4-6 A
00120 Helsinki (FI)

(54) **Method for improving the properties of paper or cardboard**

(57)     The object of the invention is a method for improving the surface properties of paper and cardboard. In the method, the surface of the paper or the cardboard is treated with a material composition, which contains a binder fraction and a pigment fraction, wherein part of the pigment is formed by an aqueous phase polymerization product of polymerizable monomers and modified starch. The glass transition point (Tg) of the polymer is at least +50 °C.

**Description**

The object of the invention disclosed in the application is a method for improving the surface properties, such as printability, appearance, opacity and surface strength characteristics of paper or cardboard, by treating the surface of the paper or cardboard with a material composition, especially coating the paper or cardboard. The treatment material, such as a coating composition, contains at least a binder and a pigment fraction. Part of the pigment is formed by an organic pigment.

Coating of paper or cardboard aims at improving especially the printability and appearance characteristics of the product. The coating takes place by applying onto the paper surface a coating composition (coating colour) of mineral pigments (e.g. kaolin, calcium carbonate, talcum), binders (latices, starch) and additives (rheology regulators, lubricants, hardeners and optical brighteners). Production scale coating takes place in special coating units by applying the coating colour with suitable application devices, whereafter the coated paper web is dried by transporting it through drying units (infraheaters, floating dryers). One prerequisite for the coating process to proceed undisturbed is that the coating colour has the properties suitable for the purpose: its viscosity level is in a suitable range and also generally speaking its rheological properties are good, especially at high shear rates. In this respect the requirements become more demanding when the coating speed increases (the speed can be even over 1500 m/min).

Essential quality criteria for high quality coated printing paper are the optical properties (gloss, opacity, brightness) and sufficient surface strength. By choosing the components of the coating composition in the correct way, one can substantially influence the properties. Of the mineral pigments generally in use, a better gloss is obtained when using kaolin as compared, for example, to calcium carbonate being the main mineral pigment. However, due to the other printability characteristics and the more favourable price of calcium carbonate, one has increasingly started to use carbonate based coating colours, and as a result thereof, the lower gloss level has to be improved, when necessary, by adding gloss improving compounds to the composition.

It has been shown that a very efficient way of increasing gloss is to replace part (typically 1-10%) of the mineral pigment with a polystyrene pigment made in an emulsion polymerization process (US patent 3819557, US patent 3914196, Dow Chemicals). The optical properties have been improved also by using so-called hollow pigments, which also have been made using a multistage emulsion polymerization process (EP patent 22633, Rohm & Haas).

The use of the aforementioned additives for improving gloss and other optical properties have, however, given rise to some disadvantages: the addition of the components often weakens the rheology of the coating colour, which leads to problems in the coating process. Often it is not possible to add sufficiently of these components, as they lead to a decrease in the surface strength and consequently problems during printing. In addition, the said components are often very expensive.

In the present invention, a surface treatment method for paper and cardboard is described, which is not associated with the afore mentioned problems. The essential characteristics of the method are disclosed in the appended claim 1.

In the working examples, also methods for preparing the organic polymer pigment usable in the invention are described, the use of the pigment leading to a substantial improvement in the afore mentioned disadvantages, as well as the use of the prepared polymer pigment in a coating colour.

The basic thought behind the invention is to replace part of the mineral pigment in the coating colour with a polymer which has been prepared using the emulsion polymerization technique from unsaturated polymerizable monomers in the presence of a modified starch. It surprisingly been discovered that the said polymer, the structure and manner of manufacture of which will be described later in more detail, gives the coating colour excellent rheology which is reflected as good operability of the coating process, increases substantially the surface strength of the coated paper when compared to reference products, and imparts beneficial optical properties to the product (gloss, brightness, opacity).

The preparation of the polymer pigment according to the invention is thus based on a polymerization reaction, wherein unsaturated vinylic monomers are polyemrized in an aqueous solution in the presence of a modified starch. The said reaction, which takes place initiated by an initiator producing free radicals, is analogous to the emulsion polymerization technique. As in the reaction stage there is present also a polymer dissolved in the water and participating in the reaction, i.e. the starch, a more correct name for the reaction type is a graft reaction. In the graft reaction the initiator gives rise to radical formation in the polymer backbone to be grafted (the starch), which in turn leads to the polymerization of monomeric compounds into chains attached to the said polymer. The gross result of the reaction is a dispersion which contains polymerized dispersion particles of synthetic monomers and synthetic monomers grafted to the starch, which - possibly in addition to the emulsifying agents contained in the reaction mixture - stabilizes sterically the starch which has not reacted with the monomers.

The preparation of the polymer pigment according to the invention is initiated by modifying the starch to a form usable for the purpose in question. The origin of the starch to be used can be any naturally occurring starch source. Especially well suited for the purpose are the tuberous starches, such as potato starch, which have a low fat and protein content. Usable are also products derived through chemical or physical modification from native starch. Examples of suitable modified starches are i.a. the dextrins, acetylated or etherified or cationized starches. A working example is presented below concerning the use of the last mentioned as the starch component in the preparation of the product according to the invention.

However, naturally occurring native starch or industrially modified starch is seldom suitable as such as a raw material for the process described. This is due to the high molar mass of the said natural polymers, which as such leads to an uncontrolled increase in the viscosity of the polymer dispersion to be prepared, and to precipitation phenomena in the polymer. In order to avoid these problems, the starch to be used as a raw material has to be degraded prior to the polymerization reactions. The degradation can take place by using known modification methods for starch, such a hypochlorite, persulphate or peroxide oxidation, acid hydrolysis, or for example EB- or x-ray irradiation. Especially advantageous is the use of enzymatic hydrolysis with alpha-amylase.

The degradation of the starch to a suitable viscosity level is the first stage in the preparation of the polymer pigment and it is advantageously performed in the same aqueous solution wherein also the subsequent reactions of the process are performed. In the following stage the initiator for the polymerization reaction is added, as well as the monomer mixture to be polymerized. Initiators for catalyzing the graft and polymerization reactions are i.a. hydrogen peroxide (together with a known redox pair, such as copper or iron salt, sodium metabisulphite etc), alkalimetal persulphates (ammonium, potassium and sodium persulphate). Generally, all initiator systems, which form radicals under the reaction conditions, are suitable for the purpose.

The polymerizable monomer, when used for a pigment imparting optical properties in paper coating, is comprised of components owning a so high glass transition point value (Tg-value) that the dispersion particles polymerized from the monomers do not form a film under the coating conditions to any higher degree; that is, at least the major part of the monomers are "hard" monomers. In this case, especially styrene and alpha-methyl styrene come into question, as well as methyl methacrylate. Irrespective of the afore said, it is possible to include in the monomer mixture smallish amounts of other "softer" components (for example acrylate esters). The hardness of the polymer can be calculated from the formula

$$Tg = m_1{}^*Tg_1 + m_2{}^*Tg_2 + - + m_n{}^*Tg_n$$

wherein Tg = the glass transition point of the polymer in Kelvin degrees, the $m_n$-values are the mass fractions of the individual component n of the total monomer mass, and the $Tg_n$-values are the glass transition points in Kelvin degrees of a homopolymer of the said component. The organic polymer pigment described here can be said to retain its pigment nature under the temperature conditions of the coating process, if the Tg-value of the polymerizable monomers contained therein, as calculated from the above formula, and converted to Celsius degrees, exceeds + 50 °C.

The polymerization reaction takes place at an elevated temperature, advantageously in the range of 50 - 100 °C. Details of the reaction conditions are apparent from the working examples.

The coating colour to be used in the pigment coating is formed of, as stated above, mineral pigments (kaolin, calcium carbonate, talcum etc., or mixtures thereof), binders and additives. The quantity of binder needed varies depending on the quality of the binders and pigments, and typically exceeds 4-5 parts of binder, calculated on the dry matter, per 100 pigment parts; in conventional applications the used binder quantity is advantageously 8-20 parts. The dosage level of rheology modifiers, hardeners, optical brightening agents and lubricants used as additives vary from case to case, and is typically in the range of 0-2 parts (usually 0.2-1 parts) solid matter per 100 parts of mineral pigment.

The polymer pigment described in this application is intended for use in a colour composition as described above so that a part, advantageously 0.5-20 % of the mineral pigment is replaced by the said organic polymer pigment. A coating colour containing the organic polymer pigment according to the invention can be applied to the paper surface using any coating device in use (blade coating, film transfer, air brush coating), whereafter the drying of the colour composition takes place in a conventional manner using infra and floating dryers. The subsequent treatments of the coated paper product, especially calandering, which is used for finishing and for imparting high quality visual and printing properties, when using the organic polymer pigment described in this invention take place in the same manner as for a product coated with a pigment in the traditional manner.

In addition to the above described, the polymer pigment containing organic starch can be envisaged for use i.a. in connection with surface sizing of paper, added to a conventional starch based or synthetic surface size, with an aim at improving i.a. the optical properties in a manner similar to the coating colours containing mineral pigments.

In the following, initially working examples relating to methods of preparing the organic polymer pigment are described, and thereafter working examples relating to the use of the organic polymer pigment in a paper coating colour.

**Example 1.** This example describes a typical way to prepare a polymer pigment containing organic starch. 470 g of water was heated to 70 °C. 0.23 g of alpha-amylase enzyme (trade name spetzyme AA-20) and 197.4 g of potato starch oxidized with sodium hypochlorite (Raisamyl 302, manufacturer Raisio Chemicals Oy) were added to the water. The starch was carefully mixed into the water and at the same time the temperature of the mixture was raised to 80 °C. The reaction was allowed to proceed for an hour and then cooled back to 70 °C. 0.06 g of copper sulphate and 7.94 g of anionic surface active agent of the alkyl benzene sulphonate type (Aerosol DPOS-45) were added to the mixture. An inert nitrogen atmosphere was provided by leading a small flow of nitrogen into the mixture. Thereafter the feeding of a hydrogen peroxide solution (3.91 g of 30% $H_2O_2$ in 31 ml of water) functioning as initiator and the styrene monomer feed were started simultaneously. The feed time of the catalyst solution was 3 hours and the feed time of the monomer 2 hours. After the monomer feed had ceased, the temperature was raised to 80 °C, and the reaction was allowed to proceed at this temperature for further two hours. After cooling and filtering, the product was obtained as a white dispersion with a solid content of 45.6%, pH 4.2, viscosity of 106 mPas at room temperature and dispersion particle size of 215 nm.

**Example 2**. This example differs from the previous one as to the starch used as raw material and the monomer composition. The raw material used was native potato starch (the amount of enzyme was 0.35 g). The monomer composition was a mixture with 90 % of styrene and 10 % of alpha-methyl styrene. Otherwise the preparation was carried out as in Example 1. The solid content of the product, which was a white dispersion, was 45.0 %, pH 4.3; viscosity 120 mPas and particle size 245 nm.

**Example 3.** In this example the monomer mixture comprised 90 % of styrene, 5 % of butyl acrylate and 5 % of methyl methacrylate. Otherwise the conditions were as in Example 2. The product was a white dispersion with a solid content of 46 %, pH 4.1, viscosity 100 mPas and particle size 240 nm.

**Example 4.** This example differs from Ex. 1 mainly as to its monomer/starch ratio: 0.99 g of alpha-amylase enzyme was added to 362 g of water at room temperature, and 515 g of native potato starch was slurried therein. The mixture was stirred and heated slowly (at the temperature range of starch gelatinization, 55 - 60 °C, the viscosity rose sharply, but after the enzyme had acted for a while, the viscosity decreased quickly to a range where it was easy to handle) until the temperature reached 90 °C. The degradation reaction was allowed to proceed for an hour more. The temperature was lowered to 70 °C, 74.5 g of styrene was added and at the same time 6.6 g of 30 % hydrogen peroxide in 40 g of water. The feed times were 1 and 2 hours, after which the reaction was allowed to proceed at 80 °C for another hour. After cooling and filtering, the product was obtained as a white dispersion with a solid content of 53 %, pH 4.5, particle size 820 and viscosity 280 mPas.

**Example 5**. This example discloses the preparation of an organic polymer pigment, wherein a chemically highly modified potato starch is used as the starch. The starch has first been oxidized with hydrogen peroxide (the level of viscosity after oxidation appr. 30 mPas in 10 % solution) and after this cationized by using 1,2-epoxypropyl trimethyl ammoniumchloride as a cationizing reagent so that the degree of substitution DS is appr. 0.7.

Modified starch (1724 g of 20 % aqueous solution) was weighed into a reaction vessel. 6.6 g of a nonionic fatty alcohol ethoxylate (Lutensol TO 129) was added to the mixture, and the temperature of the mixture was raised to 85 °C. 3.4 g of ammoniumpersulphate dissolved in 11.2 g of water was added, and the feed of styrene monomer (231 g) into the reaction mixture was started. The feed time of styrene was 2 hours. Half an hour after the start of the styrene supply, the feed of ammonium persulphate solution (2 g APS in 12 g of water) was slowly started. The solution was supplied steadily during two hours. After the styrene feed, the reaction was allowed to proceed for further three hours, and thereafter the reaction mixture was cooled and filtered.

The product obtained was a white dispersion with a solid content of 29.8 %, pH 3.0; viscosity 185 mPas and particle size 560 nm.

This product is useful especially in applications of coating and surface sizing, wherein also the other components of the coating mixture are cationic (surface sizing with a cationic starch, pigmenting with a coating colour wherein the mineral pigment has been dispersed by using cationic dispersing agents and cationic starch or cationic lateces are used as binding agents). Furthermore, a cationic dispersion of this type can be added to paper pulp in a controlled way, whereby the problems of fouling, caused by disturbing anionic agents, can be reduced.

**Examples 6-14.** A series of tests was carried out wherein optimal circumstances for preparing the product were searched for, having the reaction conditions of Example 1 as a starting point. The variable parameters were the starch/monomer ratio, the amount of emulsifying agent, the amount of initiator, as well as reaction temperature. In the table below the values of the variable parameters used in the synthesis series and the quality properties of the dispersion obtained as product are given:

Table 1. Preparation and property parameters of Examples 6 to 14:

| Ex.no. | Starch /styrene | DPOS-45 (1 | Amount of cata- lyst (2 | Reaction tempera- ture | Dry mat- ter | pH | Vis- cosity | Particle size |
|---|---|---|---|---|---|---|---|---|
| 6 | 30:70 | 0.6 | 0.25 | 90 | 47.6 | 4.3 | 61.2 | 197.1 |
| 7 | 30:70 | 0.8 | 0.4 | 85 | 48.7 | 4.1 | 68.4 | 169.7 |
| 8 | 30:70 | 1.0 | 0.55 | 75 | 45.4 | 3.8 | 72.8 | 195.2 |
| 9 | 40:60 | 0.6 | 0.4 | 75 | 47.8 | 4.1 | 119 | 214.1 |
| 10 | 40:60 | 0.8 | 0.55 | 90 | 45.0 | 4.1 | 70.8 | 246.8 |
| 11 | 40:60 | 1.0 | 0.25 | 85 | 44.0 | 4.4 | 184 | 237.9 |
| 12 | 50:50 | 0.6 | 0.55 | 85 | 45.1 | 4.40 | 81.2 | 427.0 |
| 13 | 50:50 | 0.8 | 0.25 | 75 | 44.2 | 4.61 | 57.6 | 384.7 |
| 14 | 50:50 | 1.0 | 0.4 | 90 | 44.9 | 4.3 | 60.4 | 342.7 |

(1 % of solid content

(2 100% peroxide on the basis of solid content

EP 0 784 119 A1

**Example 15.** 26.3 g of native potato starch were slurried in 335 g of water and 0.23 g of alpha-amylase enzyme were added. The mixture was heated to 90 °C, and it was stirred at this temperature for an hour. After this, a mixture of emulsifying agents, containing 8.6 g of the emulsifier Aerosol DPOS-45 of the alkylbenzene sulphonate type and 6.5 g of the emulsifier Lutensol TO 129 of the fatty alcohol ethoxylate type in 30 g of water, and an initiator solution (2.5 g of ammonium persulphate dissolved in 14 g of water) were added to the solution. When the temperature was 90 °C, the feed of the mixture of monomers into the reaction mixture was started. The monomer mixture was a solution containing 380 g of styrene, 8.5 g of acrylic acid and 21.5 g of alpha-methyl styrene. The feed time of the monomer mixture was 2.5 hours. When the monomer had been supplied for half an hour, the feed of the initiator/emulsifier mixture was started. This mixture contained 4.6 g of ammonium persulphate, 8.6 g of the emulsifying agent Aerosol DPOS-45, and 6.5 g of the emulsifying agent Lutensol TO 129 dissolved in 95 g of water, and the total feed time was two hours. After this feed had ceased, the temperature was lowered to 80 °C for half an hour. Then 0.15 g of tert-butyl hydroperoxide were added and the cooling of the reaction mixture was started. At the same time, 0.4 g of sodium bisulphite dissolved in 11.5 g of water was supplied to the reaction mixture. The feed time was one hour. Finally pH was adjusted by adding to the reaction mixture 15 ml of a 12.5 % ammonia solution.

The product obtained was a white dispersion with a solid content of 46.5 %, pH 6.7, viscosity 35 mPas and particle size 235 nm.

In the following examples the use of an organic, starch containing polymer pigment in coating colours of paper/cardboard is described.

**Example 16.** The performance of the organic polymer pigment prepared in Example 1 was tested by adding the product into the colour composition of Table 2. The experimental protocol was according to the experimental design principle of Taguchi with the quality of the polymer pigment (the traditional polystyrene pigment RN-250, manufacturer Raisio Chemicals, as reference product), the amount of the polymer pigment, and the mineral pigment composition, as variables.

Table 2.

| Colour compositions used in the coating experiment. The solid content of the colour 63 % and pH 8.5. | | | | |
|---|---|---|---|---|
| | Test 1 | Test 2 | Test 3 | Test 4 |
| Calcium carbonate | 50 | 30 | 30 | 50 |
| Kaolin | 47 | 62 | 67 | 42 |
| RN-250 | 3 | 8 | - | - |
| Pigment of Ex.1 | - | - | 3 | 8 |
| SB-latex | 11.5 | 11.5 | 11.5 | 11.5 |
| CMC (1 | 0.7 | 0.7 | 0.7 | 0.7 |
| Optical brightener | 0.7 | 0.7 | 0.7 | 0.7 |

(1 Carboxy methyl cellulose

The colour was applied onto a precoated fine paper with a grammage of 75 g/m$^2$ with a Helicoater laboratory coating device. The values measured from the colours, representing the properties of the colour, as well as the analyses measured from the coated paper samples, are given in Table 3.

Table 3.

| | Test 1 | Test 2 | Test 3 | Test 4 | |
|---|---|---|---|---|---|
| Organic pigment | RN-250 (3) | RN-250 (8) | Pigment of Ex. 1 (3) | Pigment of Ex. 1 (8) | Ranking |
| Colour results: | | | | | |
| Brookfield viscosity (1 | 1215 | 1440 | 1130 | 1250 | Pigment of Ex. 1 |
| Water retention (2 | 115 | 108 | 101 | 116 | Ex. 1 pigment |
| Haake viscosity (3 | 33.5 | 41.5 | 27.3 | 30.1 | Pigment of Ex. 1 |
| Paper results: | | | | | |
| Gloss, not calendered (4 | 64.7 | 69.1 | 68.5 | 65.7 | Pigment of Ex. 1 |
| Gloss, calendered (5 | 80.7 | 83.5 | 81.7 | 80.7 | RN-250 |
| Brightness (6 | 84.1 | 82.9 | 83.4 | 85.0 | Pigment of Ex. 1 |
| IGT surface strength (7 | 55.5 | 52.5 | 63.0 | 86.5 | Pigment of Ex. 1 |

(1 mPas, 100 rpm; (2 ÅAGWR-method, g/m$^2$; (3 mPas, 40000 1/s; (4 %, Hunter (5 %, Hunter, (6 %, ISO, (7 cm

EP 0 784 119 A1

The results given in the table are the averages of four parallel measurements. The analyses have been made according to the standards prevailing in the art. The column 'Ranking' gives the preferred pigment choice according to the experimental design principle of Taguchi.

The colour results show that, when the coating process is considered, the pigment prepared in Example 1 gives to the coating colour more favourable properties in every respect than the reference pigment. Considering the properties of the paper, the product prepared according to Example 1 is slightly inferior as regards the gloss measured from calendered paper, but is better than the reference sample in other respects.

**Example 17.** The pigment studied was the organic polymer pigment prepared according to Example 3.

The amount of gloss providing kaolin pigment in the colour was reduced and it was replaced by an organic polymer pigment.

The experimental matrix is shown in Table 4. The values measured from the colour and the paper test values measured after the Helicoater coating are given in Table 5.

Table 4.

| | Test 1 | Test 2 | Test 3 | Test 4 | Test 5 | Test 6 | Test 7 | Test 8 | Test 9 | Test 10 | Test 11 |
|---|---|---|---|---|---|---|---|---|---|---|---|
| Calcium carbonate | 50 | 50 | 50 | 50 | 50 | 50 | 50 | 50 | 50 | 50 | 50 |
| Kaolin | 50 | 48 | 46 | 44 | 42 | 40 | 48 | 46 | 44 | 42 | 40 |
| RN-250 | – | 2 | 4 | 6 | 8 | 10 | – | – | – | – | – |
| Pigment from Ex. 3 | – | – | – | – | – | – | 2 | 4 | 6 | 8 | 10 |
| SB-latex | 11.5 | 11.5 | 11.5 | 11.5 | 11.5 | 11.5 | 11.5 | 11.5 | 11.5 | 11.5 | 11.5 |
| CMC | 0.7 | 0.7 | 0.7 | 0.7 | 0.7 | 0.7 | 0.7 | 0.7 | 0.7 | 0.7 | 0.7 |
| Optical brightener | 0.7 | 0.7 | 0.7 | 0.7 | 0.7 | 0.7 | 0.7 | 0.7 | 0.7 | 0.7 | 0.7 |

Table 5.

| | Test 1 | Test 2 | Test 3 | Test 4 | Test 5 | Test 6 | Test 7 | Test 8 | Test 9 | Test 10 | Test 11 |
|---|---|---|---|---|---|---|---|---|---|---|---|
| Colour results: | | | | | | | | | | | |
| Brookfield viscosity | 1200 | 1240 | 1380 | 1380 | 1420 | 1480 | 1100 | 1200 | 1190 | 1200 | 1200 |
| Water retention | 140 | 141 | 127 | 132 | 142 | 125 | 141 | 110 | 91 | 88 | 78 |
| Paper tests: | | | | | | | | | | | |
| Gloss, not calendered | 64.8 | 65.0 | 65.3 | 65.2 | 66.0 | 66.8 | 64.7 | 66.2 | 66.8 | 66.4 | 67.2 |
| Gloss, calendered | 79.7 | 80.2 | 80.4 | 81.2 | 81.8 | 82.5 | 79.9 | 80.9 | 81.1 | 81.4 | 82.0 |
| Brightness | 84.3 | 84.0 | 84.1 | 84.1 | 84.0 | 84.0 | 84.6 | 84.6 | 84.7 | 84.7 | 84.7 |
| Opacity | 93.8 | 93.7 | 93.5 | 93.4 | 93.4 | 93.2 | 93.7 | 93.6 | 93.6 | 93.6 | 93.6 |
| IGT surface strength | 51 | 52 | 56 | 57 | 59 | 65 | 76 | 78 | 89 | 102 | 104 |

From the results it is seen that the pigment prepared according to Example 3 gives the colour a better water retention (lower value is better) and a lower viscosity. Both organic pigments used are able to compensate the reduction in the gloss resulted from a lower kaolin pigment proportion, the pigment of Example 3 gives a better brightness, opacity and clearly a better surface strength.

**Example 18**. Five parts of the organic polymer pigment prepared according to Example 16 were added to the colour composition of test 1 of Example 18, thereby obtaining a colour with a Brookfield viscosity of 1120 mPas, the static water retention measured with the AAGWR method being 120 g. From a fine paper (the same as in Example 18) coated with the colour, the uncalendered gloss was measured to be 66.0 %, the gloss after calendering 84.0 %, brightness 84.2 % and opacity 93.7 %. The surface strength of the paper measured with the IGT method was 68 cm.

**Example 19.** This example describes the use of the cationic organic pigment prepared according to Example 5 in a cationic colour. The pigment was tested in a colour composition wherein a cationically dispersed calcium carbonate was used as mineral pigment and the cationic dispersion KDISP31, prepared according to Example 5, as binding agent but, however, the monomer mixture to be polymerized consisted mainly (64 %) of a soft, film producing monomer (butyl acrylate), the rest of the monomer mixture being styrene, and the amount of the cationic starch used was 8 % of the total amount of monomers and starch. Further, a cationic internal starch, Raisamyl 135 (manufacturer Raisio Chemicals Oy), was used as a rheology regulator in the colour.

The colour formulas tested were:

|  | Formula A | Formula B |
|---|---|---|
| $CaCO_3$ | 100 | 95 |
| Ex. 5 pigm. | 0 | 5 |
| KDISP31 | 14 | 14 |
| Raisamyl 135 | 0.5 | 0.5 |

The solid contents of the colours were 54.5 % and pH 7.5.

The colours were applied with a Helicoater laboratory coater onto a woodfree offset base paper (grammage 90 g/$m^2$). The amount of coating was 8 g/$m^2$. The coated papers were calendered at a temperature of 65 °C with a nip pressure of 60 bar.

The measured colour and paper properties are given below:

|  | Formula A | Formula B |
|---|---|---|
| Brookfield viscosity of the colour (mPas) | 858 | 870 |
| IGT surface strength, m (* | 2.46 | 2.53 |
| Gloss (Hunter, %) | 51.3 | 54.2 |
| Brightness, % | 87.1 | 87.9 |
| Opacity, % | 92.0 | 91.9 |

(* measurement was made with a printing ink of a low viscosity

**Claims**

1. Method for improving the surface properties, such as printability, appearance, and surface strength characteristics of paper or cardboard, by treating the surface of the paper or cardboard with a material composition, which contains at least a binder and a pigment fraction, wherein part of the pigment fraction is formed by an organic pigment, **characterized** in that an aqueous phase polymerization product of polymerizable monomers and modified starch is used as the organic pigment, which product has a glass transition point (Tg) of at least +50 °C.

2. The method according to claim 1, **characterized** in that the modified starch used in the method is native starch degraded by oxidation or enzymatically, or is chemically modified starch.

3. The method according to claim 1, **characterized** in that polymerization reaction used in the preparation of the organic polymer pigment is catalyzed by an initiating reaction producing hydrogen peroxide, a persulphate salt or other radicals.

4. The method according to claim 1, **characterized** in that the polymerizable monomer is styrene, alpha-methyl styrene or a mixture of these monomers.

5. The method according to claim 4, **characterized** in that the polymerizable monomer mixture contains in addition to styrene and/or alpha-methyl styrene, further polymerizable monomers.

6. The method according to claim 1, **characterized** in that the starch used in the preparation of the organic polymer pigment is cationic starch and the other components of the coating mixture are cationic or non-ionic.

7. The method according to any one of the preceding claims 1-6, **characterized** in that the organic pigment is used in an amount of 0.5 - 20 % of the total amount of pigment.

8. The method according to any one of the claims 1-7, **characterized** in that the surface treatment of the paper or cardboard is carried out using a coating technique.

9. The method according to any one of the claims 1-7, **characterized** in that the surface treatment of the paper or cardboard is carried out using a surface sizing technique.

EP 0 784 119 A1

**European Patent Office**

**EUROPEAN SEARCH REPORT**

Application Number

EP 97 66 0001

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 003 022 A (NGUYEN CHARLES C ET AL) 26 March 1991 * column 3, line 50 - column 11, line 59; examples 1-3,11,12,17 * | 1-5,7,8 | D21H19/42 |
| X | WO 93 11300 A (RAISION TEHTAAT OY AB) 10 June 1993 * page 5; claims 1-3,6,7,9; examples 1,4,6 * | 1-5,8 | |
| X | US 3 518 176 A (REYES ZOILA ET AL) 30 June 1970 * column 7, line 3 - column 7, line 25; example 6 * | 1,3,8,9 | |
| A | US 5 439 558 A (BERGMANN WERNER ET AL) 8 August 1995 * the whole document * | 1,7,8 | |
| A | US 4 552 940 A (VAN EENAM DONALD N) 12 November 1985 * the whole document * | 1-6 | TECHNICAL FIELDS SEARCHED (Int.Cl.6) D21H |
| A | US 4 173 488 A (NAUMAN EDWARD F ET AL) 6 November 1979 | | |
| D,A | US 3 819 557 A (LOEFFLER N ET AL) 25 June 1974 | | |

The present search report has been drawn up for all claims

| Place of search | Date of completion of the search | Examiner |
|---|---|---|
| MUNICH | 15 April 1997 | Nestby, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

13